# EUROPEAN PATENT APPLICATION

(11) **EP 2 369 208 A1**
(43) Date of publication of application: **28.09.2011**
(21) Application number: 10156900.2
(22) Date of filing: 18.03.2010
(51) Int. Cl.: F16K 15/20

(54) **A valve device for an inflatable tire**

(71) Applicant: Smart Parts Nordic A/S, 2930 Klampenborg (DK)
(72) Inventor: Halfdan Breck, Rasmus, København S (DK); Thøgersen, Lars, 2300 København S (DK)
(74) Representative: Inspicos A/S

(57) **Abstract**

A valve device, such as a pressure relief device, for an inflatable tire comprises a body, an inlet of which is connectable to an inflation device. A conduit is provided for leading air from the inflation device to the tire. A pin, which is accessible by the inflation device, and which is arranged to slide axially in a passageway in the body, is provided in slidable fashion, e.g. to release a stem of a valve tire. In one aspect of the invention, the body defines a collar portion at the inlet end, and the valve device comprises a flange of increased diameter, whereby a closing mechanism may force the flange into sealing engagement with the collar portion of the body to seal the interior of the valve device and hence of the tire. In a second aspect of the invention, the outer surface of the pin interacts with an interior circumferential surface of the body to define the air flow conduit and to stabilize the pin radially within the body.

## Description

### Technical field

The present invention relates to a valve device for an inflatable tire, in particular a tire for a vehicle. The device is intended to facilitate inflation of the tire by means of an inflation device, such as a pump or compressor, and may be provided as a spare unit which is mountable to a valve integrated in the tire, or it may itself be integrated in the tire. The valve device may incorporate a pressure relief mechanism intended to release air from the tire when the pressure in the tire exceeds a certain threshold value or to prevent excess air from being forced into the tire during inflation thereof.

### Background of the invention

Various pressure relief devices for inflatable tires have been proposed in the prior art. US patent No. 3,830,249 discloses a device in which a pressure relief ball is maintained in a seated position by a force applied by a compression spring until the air pressure within the tire exceeds a set pressure. When the set pressure has been exceeded, the pressure relief ball is unseated from the body, and surplus air escapes from the tire via the pressure relief device.

US patent No. 4,660,590 is concerned with an inflation pressure regulator with a substantially friction-free flexing seal arrangement within a housing of the regulator which bypasses the tire when the pressure within the tire reaches a predetermined level. A sealing section of a flexure member is normally urged into sealing contact with a seat surface owing to the force exerted against the flexure member by a spring/ring combination. When the tire has been inflated to the pressure rating of the regulator, the pressure in a first chamber in the housing will exert sufficient force against the upper face of the flexure member to cause a flexing in a portion thereof and a consequential movement of the sealing section away from the seat surface, allowing air to escape via an exhaust aperture.

WO 2007/134611 discloses a pressure relief device for an inflatable tire comprising a body having a pressure relief mechanism and a conduit being provided as a passage in a pin for releasing a stem of a tire.

Embodiments of the present invention are concerned with improvements relating to sealing of the valve device on the one hand and to mechanical stabilization and guidance of an axially slidable pin within the device on the other hand, the pin serving to release a stem of a tire valve or simply as a closure element in the valve device.

### Description of the invention

In a first aspect, the present invention provides a valve device for an inflatable tire, comprising:
- a body, wherein an air inlet end of the body is connectable to an inflation device, and wherein an air outlet end of the body is connectable to a valve of a tire;
- a conduit for leading air from the inflation device to the tire during inflation thereof;
- a pin, which is accessible by the inflation device, and which is arranged to slide axially in a passageway in the body, the pin having a first end and a second end and being slidable between a first position, in which the air conduit is closed, and a second position, in which the air conduit is open, wherein the first end of the pin is arranged in the vicinity of the air inlet end of the body when the pin is in said first position;
wherein:
- the body defines a collar portion at the inlet end;
and wherein the valve device comprises:
- a flange of increased diameter at the first end of the pin;
- a closing mechanism for forcing the pin towards the first position, when the pin is out of contact with the inflation device, and for forcing the flange into sealing engagement with the collar portion of the body when the pin is in the first position.

Owing to the interaction between the flange, the collar portion and the closing mechanism, which acts on the flange to hold it in sealing engagement with the collar portion, the interior of the body may be safely sealed to prevent unintended escape of air. This closing structure of the present invention hence presents an attractive alternative to, e.g., certain embodiments of the device of WO 2007/134611, in which a circumferential sealing function might have to be provided between the stem-releasing pin and an inner surface in the body. Such sealing function is not necessarily easily achievable, as the need for efficient sealing compromises the desire for unhindered movement of the stem-releasing pin between its valve-opening and valve-closing positions. However, in the first aspect of the present invention, the provision of the closing mechanism, which acts on the flange, i.e. preferably in an axial direction of the pin, allows the interior of the body and hence the valve device to be sealed by means of an axial force and hence eliminates the need for circumferential sealing. It should be understood that the scope of the first aspect present invention generally extends to valve devices which are sealed by an axial biasing force acting on two mating surfaces, which are axially movable relative to one another, e.g. a flange and a collar portion.

The flange and the pin may conveniently be physically connected, e.g. made from one integrated piece of material. However, they may alternatively be separate elements, which are joined or arranged without physical contact between them.

The closing mechanism may comprise a spring element, comprising e.g. a compression spring acting in axial direction on the flange towards sealing engagement with the collar portion of the body.

The valve device may further comprise a pressure relief mechanism for releasing air from a first chamber within the body when the pressure therein exceeds a predetermined level. The pressure relief mechanism may comprise a further spring element arranged in the body, the spring element exerting a closing force on a closure element, so that the closure element opens at a predetermined air pressure level in a chamber within the body. A passage may be provided, which connects the chamber to an exterior environment, the passage being normally closed by the closure element, with the closure element being arranged such that the pressure in the chamber exerts a force on the closure element to open the passage when the force derived from the pressure in the chamber exceeds a counteracting closing force of the pressure-relief mechanism.

In one embodiment of the present invention, the closing mechanism comprises a first spring element arranged to exert a force on the flange, and the pressure relief mechanism comprises a second spring element for exerting a closing force on a closure element, so that the closure element opens at said predetermined pressure level. However, other types of biasing means are contemplated for the closing mechanism as well as for the closure element, such as e.g. motor-operated valves or valves based on electromagnets. In respect of the pressure relief mechanism, such means may be controlled in response to a pressure measurement of the air pressure in the chamber, and in respect of the closing mechanism for holding the flange in sealing engagement with the flange, electronic closing and opening means may be controlled in response to signals of one or more appropriate sensors for detecting when the valve device is connected to an inflation device, or in response to user activation.

With a view to facilitating production of the valve device, notably assembly thereof, the collar portion may be sufficiently flexible to allow the pin and the flange to be pressed into the body during assembly of the valve device and yet sufficiently stiff to resist the biasing force of the closing mechanism when the flange is held in sealing engagement with the collar portion. The collar portion may preferably be moulded from a plastics material in one integrated piece with a housing portion of the body, and the properties of the plastics material as well as the thickness and radial extent of the collar portion may be selected such that the aforementioned ability to flex during assembly is accomplished, whilst ensuring that the collar portion firmly resists the closing force acting on the flange.

A tubular guide member may further be provided within the body, the guide member being arranged circumferentially around the pin. In order to provide a radial support for the pin, at least a first portion of the guide may be arranged in contact with at least a portion of an outer surface of the pin. Preferably, the guide member extends past the pressure relief mechanism, so that the guide member not only stabilizes and supports the pin, but also serves to define the flow conduit for air. Hence, the conduit may be provided between the tubular guide member and the pin, for example in the form of a plurality of air flow passages along the outer circumference of the pin, the air flow passages being provided as axially extending grooves in the outer circumference of the pin and/or in the inner circumference of at least the first portion of the tubular guide member. It should be understood, however, that in alternative embodiments, the conduit may be provided as a passage extending through the interior of the pin.

The compression spring of the pressure relief mechanism may conveniently be arranged essentially coaxially with the tubular guide member and/or the pin, with the spring surrounding the tubular guide member and/or the pin. The pin and the tubular guide member may further extend through, preferably centrally through, the closure element of the pressure relief mechanism.

The tubular guide member may conveniently comprise a second portion having an inner diameter, which is larger than the inner diameter of the first portion, whereby the second portion of the tubular guide member may accommodate the closing mechanism. At the transition between the first and second portions, the tubular guide member may define an outer collar or flange, which may rest against an upper surface of a fixed annular support in the interior of the valve body. A lower surface of the fixed annular support body may be arranged to provide a contact surface to that end of the compression spring of the pressure relief mechanism, which is opposite to the closure element.

It will be appreciated that the tubular guide member may be integral with the body, i.e. the housing of the valve device. In other words, the two parts may be integrally formed from one piece of material, preferably plastics. Alternatively, the tubular guide member may be provided as a separate element, which is bonded to the interior of the body or force-fitted into the body.

In a second aspect, the present invention provides a valve device for an inflatable tire, comprising:
- a body, wherein an air inlet end of the body is connectable to an inflation device, and wherein an air outlet end of the body is connectable to a valve of a tire;
- a conduit for leading air from the inflation device to the tire during inflation thereof;
- a pin, which is accessible by the inflation device, and which is arranged to slide axially in a passageway in the body, the pin having a first end and a second end and being slidable between a first position, in which the air conduit is closed, and a second position, in which the air conduit is open, wherein the first end of the pin is arranged in the vicinity of the air inlet end of the body when the pin is in said first position;
wherein:
- a portion of an outer circumferential surface of the pin is in contact with an inner circumferential surface in the body;
- the conduit is provided between one or more portions of said outer surface of the pin, which are out of contact with said inner circumferential surface in the body, and the inner circumferential surface in the body.

It will hence be appreciated that the outer circumferential surface of the pin may interact with the inner circumferential surface in the body to not only stabilize the pin in radial direction, but also to provide one or more well-defined flow passages along the outer surface of the pin. In one embodiment, the conduit comprises a plurality of air flow passages along the outer circumference of the pin, the air flow passages being provided as axially extending grooves in the outer circumferential surface of the pin and/or in the inner circumferential surface in the body. The inner circumferential surface of the body may be provided and defined by a tubular guide member as described above in relation to the first aspect of the invention. The tubular guide member may be integral with the body, i.e. the housing of the valve device, as the two parts may be integrally formed from one piece of material, preferably plastics. Alternatively, the tubular guide member may be provided as a separate element, which is bonded to the interior of the body or force-fitted into the body.

It should generally be understood that any feature described above in relation to the valve of the first aspect of the invention may be embodied in the valve of the second aspect of the invention. Hence, the body of the valve of the second aspect of the invention may define a collar portion at the inlet end, and the valve device may comprise:
- a flange of increased diameter at the first end of the pin;
- a closing mechanism for forcing the pin towards the first position, when the pin is out of contact with the inflation device, and for forcing the flange into sealing engagement with the collar portion of the body when the pin is in the first position. Further, a pressure relief mechanism may be provided for releasing air from a first chamber within the body when the pressure therein exceeds a predetermined level. The closing mechanism may comprise a first spring element arranged to exert a force on said flange, and the pressure relief mechanism may comprise a second spring element for exerting a closing force on a closure element, so that the closure element opens at said predetermined pressure level. The collar portion may be sufficiently flexible to allow the pin and the flange to be pressed into the body during manufacture of the valve device and sufficiently stiff to resist the biasing force of the closing mechanism when the flange is held in sealing engagement with the collar portion. The tubular guide member may comprise a second portion having an inner diameter, which is larger than the inner diameter of a first portion thereof, and the second portion of the tubular guide member may accommodate the closing mechanism.

It will hence generally be understood that the first and second aspects of the invention may be provided in a single valve device, which hence embodies both aspects.

The invention further provides an inflatable tire comprising a valve device according to the first and/or second aspect of the invention. The valve device may be provided as a spare unit which is mountable to a valve integrated in the tire, or it may itself be integrated in the tire.

### Description of the drawings

Embodiments of the invention will now be described with reference to the drawings, in which:
Fig. 1 shows a longitudinal cross section through a first embodiment of a valve device according to the first and second aspects of the invention;
Fig. 2 shows a pin of the valve device of Fig. 1;
Fig. 3 shows a transverse cross-section through the valve device of Figs. 1 and 2;
Fig. 4 shows a longitudinal cross section through a second embodiment of a valve device according to the first and second aspects of the invention;
Fig. 5 shows a tubular guide member of the valve device of Fig. 4;
Fig. 6 shows a transverse cross-section through the valve device of Figs. 4 and 5.

The valve device 100 shown in the drawings comprises a body 102, and a pin 104/204 for releasing a stem of a tire valve (not shown). The pin 104/204 is slidingly mounted in the body. A bottom portion of the body defines a chamber 116 for receiving a valve of a tire (not shown) centrally within the body. An insertion element 118 is fitted into the bottom portion of the body. The insertion element defines a threaded portion 120 for attaching the pressure relief device to the tire valve. The pin 104/204 defines a head or flange 106, which is biased into sealing engagement with a collar portion 103 of the body 102 by means of a first compression spring 105.

The body 102 comprises an upper portion 122 with an inlet area 124 for receiving an inflation device, such as a pump or compressor. The body further comprises an inner intermediate section 126, which is secured in the valve body 102, and against which the lower end of the first compression spring 105 rests.

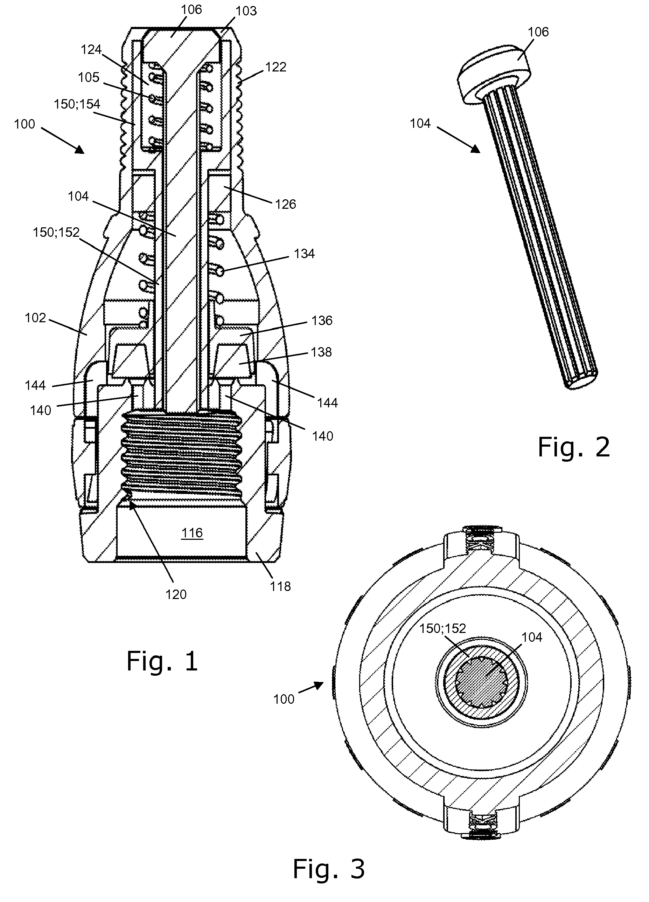

Within the body there is provided a pressure relief mechanism including a second compression spring 134, one end of which rests against the intermediate section 126, and another end of which acts on a closure element 136. The closure element holds a ring-shaped elastomeric closure member 138, which, in the closed configuration shown in Fig. 1, keeps flow passages 140 closed. Alternatively, four elastomeric closure members 138 are provided. When the pressure relief mechanism is open, i.e. when the closure element 136 and hence the elastomeric closure member 138 has lifted off, i.e. when the pressure within the chamber 116 exceeds the counter pressure exerted on the closure member 136 by the second compression spring 134, the flow passages 140 communicate with the exterior environment via passages 144.

The pressure relief device is operated as follows: the device is screwed onto an outer surface portion of a tire valve by means of the threaded portion 120 of the insertion element 118, the tire valve being thereby received in the chamber 116. An inflation device, such as an air hose nozzle, which is connected to a pressurized source, is then attached to the upper portion 122 of the body 102, with a stem of the inflation device (not shown) contacting the upper surface of the pin 104/204. The force exerted by the first compression spring 105 on the flange 106 of the pin 104/204 is thereby overcome, and the pin 104/204 is pressed downwards until the lower end surface of the pin 104/204 contacts the upper end of the valve stem (not shown) associated with the tire to thereby open the tire valve. Air flows from the pressurized source to the interior of the tire via the passage along the outer surface of the pin 104/204. The air pressure in the chamber 116 and the flow passages 140 is thus essentially equal to the tire pressure. The pressure in the air conduit and the flow passages 140 exerts a force on the closure members 138. When the pressure in the flow passages 140 and thus in the tire reaches a certain threshold level, the force acting upwardly on the closure members 138 is sufficient to overcome the downwardly acting force of the second compression spring 134. Thus, air may escape to the exterior environment via passages 140 and 144.

The threshold pressure level is determined by the properties of the second compression spring 134, the surface area of the closure members 138, and the distortion of the compression spring 134. In one embodiment, the distortion of the compression spring may be varied by displacement (rotation) of the upper portion 122.

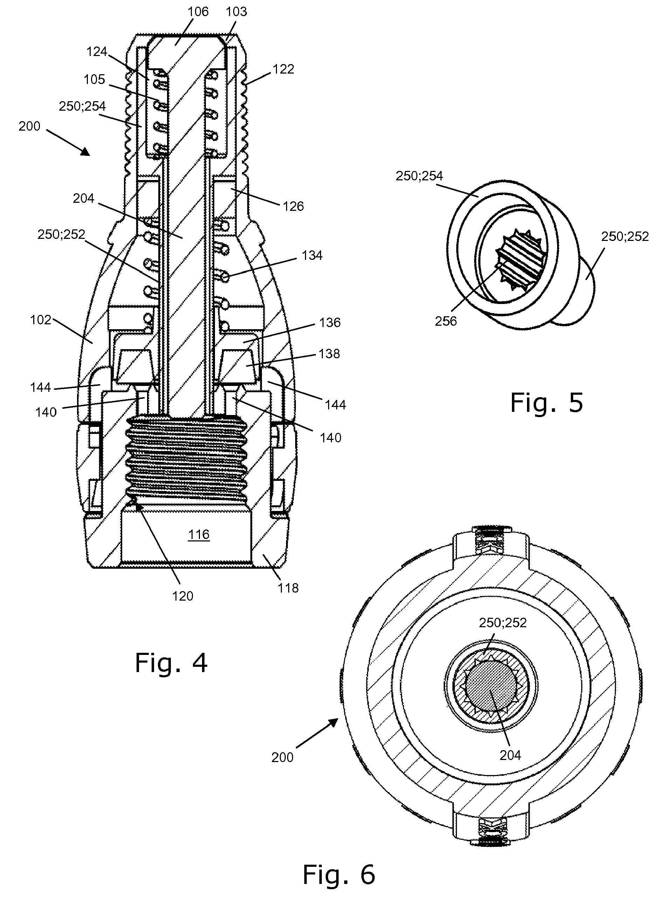

In the embodiment of Figs. 1-3, the outer surface of the pin 104 comprises a plurality of grooves as shown in Figs. 2 and 3. The full-diameter sections of the pin 104 between the grooves make contact with an inner circumferential surface of a tubular guiding member 150 (see Fig. 1). In the alternative embodiment shown Figs. 4-6, the pin 204 has a cylindrical outer surface, whereas a first portion 252 of the alternative embodiment of the tubular guiding member 250 is provided with internal grooves 256, which define flow passages when the pin 104 makes contact with the inner circumferential surface portion of the tubular guide member 250.

The tubular guiding member 150/250 comprises a first portion 152/252, which interacts with the pin 104/204 to define flow passages and to stabilize the pin 104/204 in radial direction. Further, the tubular guiding member 150/250 comprises a second portion 154/254 of increased diameter, which accommodated the first compression spring 105 for holding the flange 106 of pin 104/204 in sealing engagement with collar 103 of the device body 102. The upper end of the second portion 154/254 may rest against an outer portion of the collar 103, whilst the flange, i.e. head, 106 of pin 104/204 may rest against an inner portion of the collar 103 as shown in Figs. 1 and 4.

## Claims

1. A valve device for an inflatable tire, comprising:
- a body, wherein an air inlet end of the body is connectable to an inflation device, and wherein an air outlet end of the body is connectable to a valve of a tire;
- a conduit for leading air from the inflation device to the tire during inflation thereof;
- a pin, which is accessible by the inflation device, and which is arranged to slide axially in a passageway in the body, the pin having a first end and a second end and being slidable between a first position, in which the air conduit is closed, and a second position, in which the air conduit is open, wherein the first end of the pin is arranged in the vicinity of the air inlet end of the body when the pin is in said first position;
wherein:
- the body defines a collar portion at the inlet end;
and wherein the valve device comprises:
- a flange of increased diameter at the first end of the pin;
- a closing mechanism for forcing the pin towards the first position, when the pin is out of contact with the inflation device, and for forcing the flange into sealing engagement with the collar portion of the body when the pin is in the first position.

2. A valve device according to claim 1, further comprising a pressure relief mechanism for releasing air from a first chamber within the body when the pressure therein exceeds a predetermined level.

3. A valve device according to claim 2, wherein the closing mechanism comprises a first spring element arranged to exert a force on said flange, and wherein the pressure relief mechanism comprises a second spring element for exerting a closing force on a closure element, so that the closure element opens at said predetermined pressure level.

4. A valve device according to any of the preceding claims, wherein the collar portion is sufficiently flexible to allow the pin and the flange to be pressed into the body during manufacture of the valve device and sufficiently stiff to resist the biasing force of the closing mechanism when the flange is held in sealing engagement with the collar portion.

5. A valve device according to any of the preceding claims, further comprising a tubular guide member within the body, the guide member being arranged circumferentially around the pin with at least a first portion of the guide in contact with at least a portion of an outer surface of the pin.

6. A valve device according to claim 5, wherein the tubular guide member comprises a second portion having an inner diameter, which is larger than the inner diameter of the first portion, and wherein the second portion of the tubular guide member accommodates the closing mechanism.

7. A valve device according to claim 5 or 6, wherein said conduit is provided between the tubular guide member and the pin.

8. A valve device according to claim 7, wherein said conduit comprises a plurality of air flow passages along the outer circumference of the pin, the air flow passages being provided as axially extending grooves in the outer circumference of the pin and/or in the inner circumference of at least the first portion of the tubular guide member.

9. A valve device according to claim 5 or 6, wherein said conduit is provided as a passage extending through the interior of the pin.

10. A valve device for an inflatable tire, comprising:
- a body, wherein an air inlet end of the body is connectable to an inflation device, and wherein an air outlet end of the body is connectable to a valve of a tire;
- a conduit for leading air from the inflation device to the tire during inflation thereof;
- a pin, which is accessible by the inflation device, and which is arranged to slide axially in a passageway in the body, the pin having a first end and a second end and being slidable between a first position, in which the air conduit is closed, and a second position, in which the air conduit is open, wherein the first end of the pin is arranged in the vicinity of the air inlet end of the body when the pin is in said first position;
wherein:
- a portion of an outer circumferential surface of the pin is in contact with an inner circumferential surface in the body;
- the conduit is provided between one or more portions of said outer surface of the pin, which are out of contact with said inner circumferential surface in the body, and the inner circumferential surface in the body.

11. A valve device according to claim 10, wherein the conduit comprises a plurality of air flow passages along the outer circumference of the pin, the air flow passages being provided as axially extending grooves in the outer circumferential surface of the pin and/or in the inner circumferential surface in the body.

12. A valve device according to claim 10 or 11, wherein the body comprises a tubular guide member, which defines said inner circumferential surface.

13. A valve device according to any of claims 5-9 or claim 12, wherein the tubular guide member is integrally formed with the body.

14. A valve device according to any of claims 5-9 or claim 12, wherein the tubular guide member is provided as a separate element, which is fitted into a cavity within the body.

15. An inflatable tire comprising a valve device according to any of the preceding claims.
